Europäisches Patentamt

(19) European Patent Office

Office européen des brevets

(11) Numéro de publication : **0 288 334 B1**

(12) **FASCICULE DE BREVET EUROPEEN**

(45) Date de publication du fascicule du brevet :
04.09.91 Bulletin 91/36

(51) Int. Cl.⁵ : **F16C 33/41**

(21) Numéro de dépôt : **88400599.2**

(22) Date de dépôt : **15.03.88**

(54) **Cage de roulement à fente axiale.**

(30) Priorité : **18.03.87 FR 8703721**

(43) Date de publication de la demande :
**26.10.88 Bulletin 88/43**

(45) Mention de la délivrance du brevet :
**04.09.91 Bulletin 91/36**

(84) Etats contractants désignés :
**CH DE GB IT LI SE**

(56) Documents cités :
**FR-A- 334 329
FR-A- 378 511
FR-A- 507 757
FR-A- 883 377
FR-A- 1 321 374
FR-A- 2 244 098
GB-A- 17 603**

(73) Titulaire : **S.N.R. ROULEMENTS
Boîte Postale 17 1, rue des Usines
F-74010 Annecy Cédex (FR)**

(72) Inventeur : **Ducrue, Jacques
10, rue de la Petite Pierre
F-74000 Annecy le Vieux (FR)**
Inventeur : **Valette, Michel
Quintal
F-74600 Seynod (FR)**

(74) Mandataire : **Ernst-Schonberg, Michel
REGIE NATIONALE DES USINES RENAULT (S.
0267) 8 & 10, avenue Emile Zola
F-92109 Boulogne Billancourt Cédex (FR)**

## Description

L'invention concerne une cage de roulement à fente axiale notamment pour roulements à une ou deux rangées de billes disposées entre une bague extérieure et une bague intérieure en une ou deux parties comme définie dans le préambule de la revendication 1 et connue par la publication FR-A-378511.

L'invention concerne plus particulièrement une telle cage à montage axial, constituée par déformation d'une portion de bande, comportant une partie annulaire à partir de laquelle s'étendent axialement des séparations délimitant des alvéoles de réception des corps roulants dont les ouvertures formées sur la face frontale opposée à ladite portion annulaire assurent l'encliquetage axial de la cage sur lesdits corps roulants.

Dans une cage de ce type décrite par la publication FR-A-2244098, les extrémités de la cage sont de préférence réunies si l'on désire éviter son éjection accidentelle sous l'action d'une précharge lors du processus de liaison des extrémités de la cage ou sous l'effet de contraintes axiales consécutives à une surchage du roulement.

L'invention a pour objet une cage de roulement à fente axiale à extrémités non jointives, dans le but de faciliter le processus de montage de la cage dans le roulement tout en acceptant des dilatations temporaires occasionnées par des élévations de température ou des variations dimensionnelles consécutives à un gonflement sous l'effet de polluants ou d'une variation du milieu ambiant.

L'invention a également pour objet une cage de roulement à fente axiale à guidage axial amélioré dans le but d'éviter tout risque d'éjection accidentel de la cage.

Les objectifs sont atteints conformément à l'invention qui vise une cage du type précité, défini par les caractéristiques de la revendication 1.

La cage ainsi réalisée comportera avantageusement des alvéoles à paroi cylindriques dont la réalisation est plus économique que les cages à alvéoles à paroi sphérique ou tronconique conventionnels.

La cage ainsi réalisée peut être montée aisément par déformation sur un roulement assemblé sans risque d'éjection des extrémités de la cage.

La structure d'une telle cage permet la réalisation de celle-ci sous la forme d'une bande continue dont le fractionnement et l'étendue des séparations entre les alvéoles autorise l'emploi d'un même profil pour une gamme de roulements de même épaisseur et de diamètre différents.

L'invention sera mieux comprise à l'aide de la description d'un mode de réalisation pris comme exemple non limitatif et illustré par le dessin annexé, sur lequel :

— les figures 1 et 2 représentent des demi-vues en coupe axiale de roulements à billes recevant la cage conforme à l'invention,

— la figure 3 est une vue de face d'un roulement équipé de la cage conforme à l'invention,

— les figures 4 et 5 représentent des vues en plan de la cage développée selon deux modes de réalisation de celle-ci,

— les figures 6, 7 et 8 représentent des vues développées de la cage montrant l'extrémité de celle-ci et la localisation des billes dans leurs alvéoles.

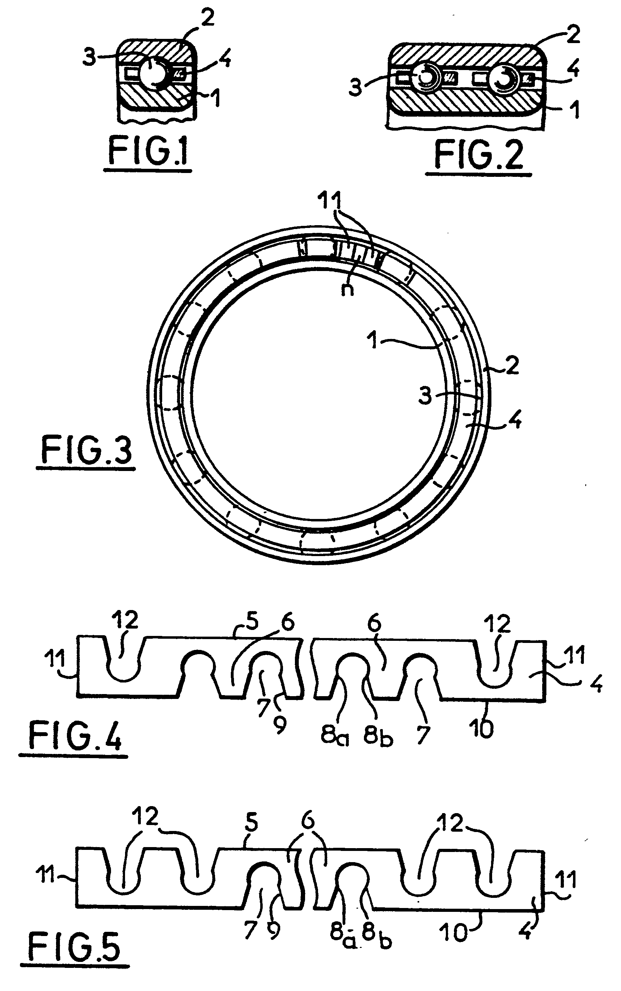

Selon les figures 1 à 3, le roulement est constitué par une bague intérieure 1 et une bague extérieure 2 portant respectivement des chemins de roulement de corps roulants 3 disposés en une ou deux rangées entre lesdites bagues 1, 2. Les corps roulants sont séparés les uns des autres dans le sens de la rotation par une cage de roulement 4.

L'insertion des corps roulants ou billes 3, dans de tels roulements, s'effectue en enlevant l'une des bagues de roulement de façon excentrique par rapport à l'autre, en ménageant ainsi un espace libre ayant la forme d'une faucille, ce qui permet d'introduire un certain nombre de billes entre les bagues intérieure 1 et extérieure 2. Les bagues 1, 2 sont ensuite centrées, et en distribuant ainsi les billes 3 entre les chemins de roulement et en insérant la cage de roulement 4 axialement entre les billes, celles-ci se trouvent centrées les unes par rapport aux autres.

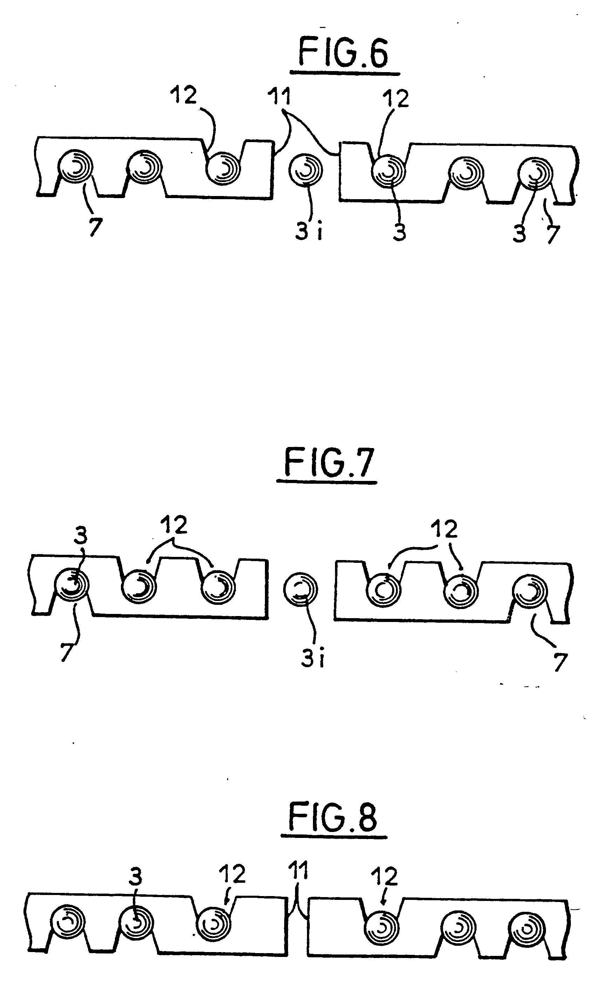

La cage 4 représentée plus en détail sur les figures 4 et 5 est formée par une bande flexible munie d'une fente n constituée à titre d'exemple par un matériau synthétique stable qui comporte une partie annulaire délimitée par une première 5 et une deuxième 10 face frontale. A partir de la première face frontale 5 s'étendent des séparations 6 dont le nombre et l'étendue sont adaptés au nombre et à la taille des billes 3.

Les séparations 6 délimitent des alvéoles 7 à paroi cylindrique de réception des billes 3 dont les bords opposés 8a, 8b, munis de chanfreins 9, possèdent un écartement d'encliquetage légèrement inférieur au diamètre des billes 3. Les ouvertures des différents alvéoles 7 sont formées sur la deuxième face frontale 10 opposée à la première face frontale 5.

Selon l'invention et dans le but d'éviter l'éjection accidentelle des extrémités 11 de la cage, celles-ci portent au moins un alvéole 12 à proximité de la fente n dont l'ouverture est prévue sur la première face frontale 5. Une bille intercalaire 3i peut en outre être disposée dans l'intervalle de séparation des extrémités 11 de la cage.

Le montage de la cage 4 sur le roulement s'effectue de la manière suivante :

Entre les bagues 1, 2 on répartit les billes 3 en deux ensembles diamétralement opposés. Le premier ensemble N est constitué par un nombre N de billes égal au nombre d'alvéoles telles que 12.

Selon le mode de réalisation de la cage représenté à la figure 4, N = 2

la figure 5, N = 4

la figure 6, N = 3

la figure 7, N = 5

la figure 8, N = 2

Le second ensemble M est constitué par le nombre restant d'éléments.

On positionne les extrémités 11 de chaque côté de l'ensemble N. On fait passer ensuite entre les bagues 1 et 2 les extrémités 11 jusqu'à ce que l'ensemble des alévoles 12 soit tourné en face des éléments de l'ensemble N.

On coiffe chacun des éléments de N par les alvéoles correspondantes 12 par déformation élastique de la bande constitutive de la cage, une bille intercalaire $3_i$ pouvant être prévue entre les extrémités 11 de la cage. On distribue ensuite les billes de l'ensemble M le long des alvéoles telles que 7 et par pression axiale sur la cage, on insert les billes 3 dans les différentes alvéoles.

Ce processus peut être adapté au montage des cages du roulement à deux rangées de billes représenté à la figure 2. On procède dans ce cas au montage simultané des deux cages.

## Revendications

1. Cage de roulement à fente axiale (n) du type comportant une partie annulaire délimitée par une première et une deuxième face frontale, des séparations (6) qui s'étendent axialement à partir de la première face frontale (5) et délimitent des alvéoles (7) de réception de corps roulants (3) dont les ouvertures formées sur la deuxième face frontale (10) opposée à la première face frontale (5) assurent l'encliquetage axial de la cage (4) sur les corps roulants (3), caractérisée par le fait que les ouvertures des alvéoles (12) disposées à proximité de la fente (n) axiale sont prévues sur la première face frontale (5), afin d'éviter l'éjection accidentelle des extrémités (11) de la cage.

2. Cage selon la revendication 1, caractérisée par le fait que l'ensemble des alvéoles (7) possèdent une paroi cylindrique.

3. Cage selon la revendication 1 ou 2, caractérisée par le fait que les bords opposés de la fente (n) sont séparés par un corps roulant (3i).

## Patentansprüche

1. Wälzlagerkäfig mit axialem Schlitz (n), der einen ringförmigen Abschnitt aufweist, welcher von einer ersten und einer zweiten Vorderfläche begrenzt wird, sowie Trennstücke (6) aufweist, die sich ausgehend von der ersten Vorderfläche (5) axial erstrecken und Aussparungen (7) zur Aufnahme der Wälzkörper (3) begrenzen, deren auf der zweiten der ersten Vorderfläche (5) gegenüberliegenden Vorderfläche (10) ausgebildete Öffnungen ein axiales Einrasten des Käfigs (4) am Walzkörper (3) gewährleisten, dadurch gekennzeichnet, daß die in der Nähe des axialen Schlitzes (n) angeordneten Öffnungen der Aussparungen (12) auf der ersten Vorderfläche (5) vorgesehen sind, um ein versehentliches Ausrasten der Enden (11) des Käfigs zu verhindern.

2. Käfig nach Anspruch 1, dadurch gekennzeichnet, daß die Gesamtheit der Aussparungen (7) eine zylindrische Wand aufweist.

3. Käfig nach Ansprüchen 1 oder 2, dadurch gekennzeichnet, daß die sich gegenüberliegenden Ränder des Schlitzes (n) durch einen Wälzkörper (3i) getrennt sind.

## Claims

1. A rolling bearing cage having an axial slot (n) of the type comprising an annular part delimited by first and second front faces, separation means (6) which extend axially from the first front face (5) and define pockets (7) for receiving rolling bodies (3), whose openings which are formed on the second front face (10) which is opposite to the first front face (5) provide for axial latching of the cage (4) on the rolling bodies (3), characterised in that the openings of the pockets (12) disposed in the proximity of the axial slot (n) are provided on the first front face (5) in order to prevent accidental ejection of the ends (11) of the cage.

2. A cage according to claim 1 characterised in that all of the pockets (7) have a cylindrical wall.

3. A cage according to claim 1 or claim 2 characterised in that the opposite edges of the slot (n) are separated by a rolling body (3i).

4

FIG.1

FIG.2

FIG.3

FIG.4

FIG.5

## FIG.6

## FIG.7

## FIG.8